# EUROPÄISCHE PATENTSCHRIFT

(11) **EP 0 628 441 B1**
(45) Veröffentlichungstag und Bekanntmachung des Hinweises auf die Patenterteilung: **25.09.1996**
(21) Anmeldenummer: 94104459.6
(22) Anmeldetag: 22.03.1994
(51) Int. Cl.: B60K 17/16, F16H 48/08

(54) **Differentialgehäuse für den Achsantrieb eines Kraftfahrzeuges**
Differential casing for motor vehicle axle drive
Boîtier de différentiel pour entraînement d'essieu de véhicule à moteur

(30) Priorität: 21.05.1993 DE 4317073
(43) Veröffentlichungstag der Anmeldung: 14.12.1994
(73) Patentinhaber: Dr.Ing.h.c. F. Porsche Aktiengesellschaft, D-70435 Stuttgart (DE)
(72) Erfinder: Stehle, Heinz, D-71287 Weissach (DE); Hoebel, Peter, D-75242 Neuhausen (DE)

(56) Entgegenhaltungen:
- EP-A- 0 375 860
- DE-A- 1 810 520
- DE-A- 2 454 067
- DE-A- 2 653 978
- DE-C- 462 127
- FR-A- 2 225 052
- FR-A- 2 293 329
- FR-A- 2 378 202

## Beschreibung

Die Erfindung betrifft ein Differentialgehäuse für den Achsantrieb eines Kraftfahrzeuges gemäß dem Oberbegriff des Patentanspruchs 1.

Aus der FR-A-22 93 329 ist ein derartiges Differentialgehäuse bekannt, bei dem zwei gepreßte oder geschmiedete Gehäuseteile miteinander verbunden sind, die wiederum mit einem Antriebsrad verbunden sind. Eines der beiden Gehäuseteile weist dabei einen im wesentlichen kontinuierlich geneigten Mantel auf, der mit eingedrückten Vorsprüngen versehen ist, die zur Lagerung eines Differentialbolzens dienen. Dieses als Mantel bzw. Tragteil ausgebildete Gehäuseteil ist durch ein zweites als Deckel ausgebildetes Gehäuseteil verschlossen. Das mit der geneigten Mantelfläche versehene Tragteil weist dazu einen Flansch auf, an dessen Außenseite der Deckel verschweißt ist. Das Antriebsrad ist mit dem Flansch des Tragteils und dem diesen überragenden Teil des Deckels verschweißt. Eine derartige Gestaltung und ein derartiger Zusammenbau eines Differentialgehäuses erfordern sehr geringe Toleranzen und aufwendige Schweißnähte.

Aus DE-PS-462127 ist ein demontierbares, aus zwei identischen, gepreßten Gehäusehälften bestehendes Differentialgehäuse bekannt, deren Verbindungsflansche eingedrückte Vorsprünge aufweisen. Zwei radial gegenüberliegende, im montierten Zustand kreisrunde Vorsprünge bilden eine in der Trennebene liegende Lagerung für einen Differentialbolzen, während an mehreren, gegenüber dem Umfangsrand des Flansches geschlossenen Vorsprüngen ein Antriebsrad an einer Gehäusehälfte anliegt. Dieses Rad ist mit Verschraubungen gehalten, welche zugleich die Gehäusehälften verbinden.

Der Erfindung liegt die Aufgabe zugrunde, ein Differentialgehäuse aus gepreßten Teilen bereitzustellen, welches konstruktiv vereinfacht und rationell zu fertigen ist, wobei gleichzeitig eine hohe Steifigkeit des Gehäuses erzielt wird.

Die Lösung dieser Aufgabe gelingt mit den Merkmalen des Patentanspruches 1. Weitere, die Erfindung vorteilhaft ausgestaltende Merkmale sind in den abhängigen Ansprüchen genannt.

Wenn ein Teil des Differentialgehäuses als ein Tragteil ausgebildet ist, welches einen im wesentlichen kontinuierlich geneigt gegenüber der Rotationsachse der Achsantriebswellen verlaufenden Mantel aufweist, in welchem die Vorsprünge zur Lagerung des Differentialbolzens angeordnet sind, so ist durch den kegelig verlaufenden Mantel die Verwendung von tiefgezogenen Stählen, insbesondere gut verformbaren Feinkornstählen, ermöglicht. Diese sind einfach und kostengünstig in Großserie formbar. Die durch den kegeligen Mantel gegebene Öffnung gestattet zudem ein einfaches Montieren der in das Gehäuse einzubringenden Bauteile. Die Anordnung des Antriebrades an einem die Öffnung umfassenden Flansch des Tragteils gewährleistet einen direkten Kraftfluß in dieses Gehäuseteil, welches durch den geschlossenen Mantel eine hohe Steifigkeit aufweist. Dieser Mantel ist lediglich durch die Vorsprünge unterbrochen, in welchen der Differtialbolzen gelagert ist. Diese Vorsprünge weisen keine Trennebene auf, so daß ohne eventuelle Verformungen oder Verschiebungen der an eine solche Trennebene grenzenden Gehäuseteile das über das Antriebsrad eingeleitete Drehmoment auf den Differentialbolzen übertragen wird.
Die Öffnung ist von mindestens einem Deckel verschlossen, so daß ein in sich geschlossenes, steifes Gehäuse entsteht, welches im Bereich des Antriebsrades gestützt ist.

In vorteilhafter Weise kann das Tragteil zusätzlich eine Stützfläche aufweisen, welche die in Richtung der Rotationsachse wirkenden Kräfte eines Differentialrades aufnimmt. Somit ist zusätzlich zu dem die Ausgleichsräder lagernden Differentialbolzen eines der Differentialräder in dem Tragteil abgestützt. Die Stützfläche ist beim Pressen des Tragteils einbrinbar, so daß kein weiterer Herstellvorgang erforderlich ist.

Die Anordnung des Flansches zur Befestigung des Antriebsrades in einem radial außen liegenden Bereich reduziert aufgrund des relativ großen Durchmessers die über das eingebrachte Drehmoment in den Flansch eingeleiteten Kräfte.

Vorteilhafterweise kann der Deckel entweder unmittelbar oder aber unter Zwischenschaltung eines Einlegeteils eine weitere Stützfläche für ein zweites Differentialrad aufweisen.

Um das Differentialgehäuse in einfacher Weise kostengünstig in einem Achsgehäuse drehbar zu lagern, können sowohl das Tragteil wie auch der Deckel jeweils parallel zur Rotationsachse verlaufende, als Lagersitz ausgebildete Abschnitte aufweisen.
Bei erhöhten Anforderungen an die Steifigkeit, insbesondere im Bereich der Differentialbolzenlagerung kann ein Lagersitz an einer separaten, an dem Tragteil befestigten Hülse ausgebildet sein.

Der Deckel kann im Querschnitt im wesentlichen dachförmig ausgebildet sein, wobei die Spitze des Daches an einer Innenfläche des das Antriebsrad tragenden Flansches befestigt ist und an einer der Schrägen die weitere Stützfläche angeordnet ist.

Um die Anforderungen an die Präzision bei der Fertigung des Differentialgehäuses weiter zu senken, können die Ausgleichsräder bzw. das eine Differentialrad beabstandet zur Innenfläche des Mantels bzw. zur Stützfläche angeordnet sein, wobei der dadurch entstehende Zwischenraum bei der Montage durch Injezieren von zunächst flüssigem Kunststoff, wie z.B. Thermo- oder Duroplast, gefüllt wird. Nach dem Erstarren des Kunststoffes stützen sich die Ausgleichs- bzw. Differentialräder unter Zwischenschaltung dieses Kunststoffes an den Innenflächen bzw. den Stützflächen ab. Eine paßgenaue und plane Anlauffläche für diese Räder ist somit nicht erforderlich.

Weitere, vorteilhafte Vereinfachungen ergeben sich unter Verzicht auf eine Möglichkeit zur Demontage durch das unlösbare Verbinden der das Gehäuse bildenden Teile miteinander bzw. mit dem Antriebsrad. Hierdurch entfällt das sonst übliche Bolzen- und Gewindeschneiden im Antriebsrad und im Gehäuse, das Eindrehen der Schrauben, die dementsprechende Anzugsmoment- und Drehwinkelkontrolle, die Schraubverbindung sowie die Schrauben selbst.
Unter Vermeidung von unerwünschten Wärmeverzügen erfolgt das Verbinden bevorzugt durch Laserschweißen, wodurch die Wärmeeintragung in die zu verbindenden Teile gering bleibt.
Die den Lagersitz tragende Hülse läßt sich kostengünstig und einfach durch Reibschweißen mit dem Tragteil verbinden.

Die Erfindung wird nachfolgend anhand einer schematischen Zeichnung beispielhaft näher erläutert. Aufgrund der rotationssymmetrischen Ausbildung wird jeweils nur eine Hälfte dargestellt, wobei
- Fig. 1: ein Differentialgehäuse mit Antriebsrad in einem Achsgehäuse zeigt,
- Fig. 2: ein Abwandlung von Figur 1 und
- Fig. 3: eine Abwandlung eines Deckels zeigt.

Ein Differentialgehäuse für den Achsantrieb eines Kraftfahrzeuges weist ein als Tellerrad 1 ausgebildetes Antriebsrad auf, welches auf einem Flansch 2 eines Tragteiles 3 unlösbar gehalten ist. Das aus dem Tragteil 3 und einem unlösbar mit diesem verbundenen Deckel 4 gebildete Differentialgehäuse ist mit Lagern 5 drehbar in einem nur teilweise gezeigten Achsgehäuse 6 gelagert. Zwei mit nicht gezeigten Fahrzeugrädern verbundene Achsantriebswellen 7 tragen drehfest je ein Differentialrad 8, 9, welche über kegelige Verzahnungen 10 mit auf einem Differentialbolzen 11 gelagerten Ausgleichsrädern 12 kämmen.

Das Tragteil 3 weist einen Mantel 13 auf, welcher im wesentlichen kontinuierlich geneigt zu einer Rotationsachse 14 der Wellen 7 verläuft. Durch eine rotationssymmetrische Ausbildung des Tragteils 3 weist der Mantel 13 somit eine kegelige Form auf.

In einem Abschnitt 15 des Mantels sind als Vorsprünge 16 ausgebildete Ausdrückungen eingepreßt, welche als Lagerung für den Differentialbolzen 11 dienen. Diese Vorsprünge 16 weisen einen geringeren radialen Abstand zur Achse 14 auf als der Flansch 2.

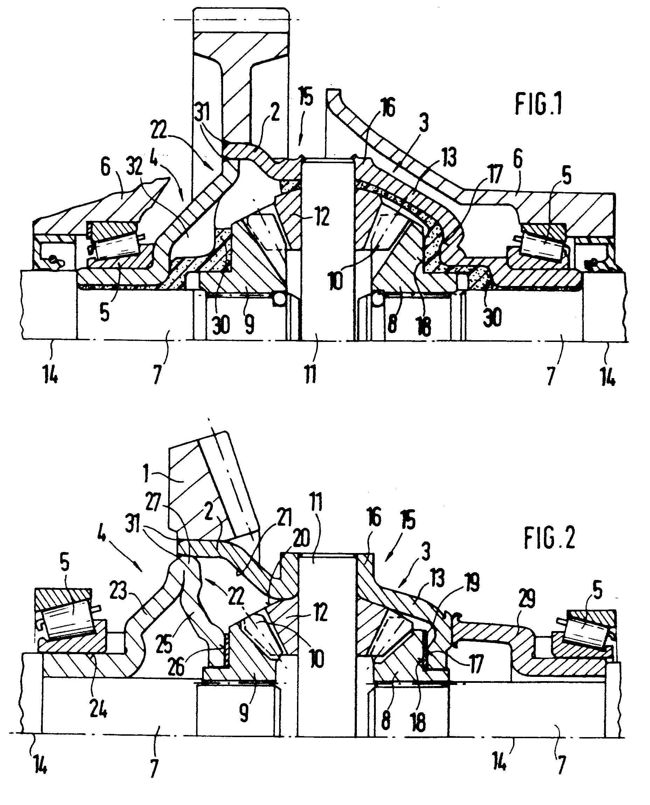

Gemäß Figur 2 weist das Tragteil 3 eine radial verlaufende Stützfläche 17 auf, an welchem eine Reibfläche 18 des einen Differentialrades 8 direkt oder unter Vermittlung einer Scheibe 19 anliegt. Die radial außenliegenden Lagerflächen 20 der Ausgleichsräder 12 gleiten bei Drehzahlunterschieden der Fahrzeugräder direkt auf der Innenfläche 21 des Mantels 13 im Bereich der Vorsprünge 16. Die bei Differenzdrehzahl entstehenden Kräfte stützen sich in Richtung der Achse 14 auf der Stützfläche 17 bzw. der Innenfläche 21 ab.

Der Flansch 2 umfaßt eine Öffnung 22 des Tragteils 3, welche durch den eingesetzten Deckel 4 verschlossen ist. Gemäß Figur 2 ist dieser Deckel 4 im wesentlichen im Querschnitt dachförmig ausgebildet, wobei an einer Schräge 23 ein parallel zur Achse 14 verlaufender Lagersitz 24 für ein Lager 5 angeordnet ist. An einer weiteren Schräge 25 ist eine weitere Stützfläche 26 für das zweite Differentialrad 9 angeordnet. Ein Verbindungsbereich 27 der beiden Schrägen 23, 25 ist mit der Innenfläche 21 im Bereich des Flansches 2 verschweißt.

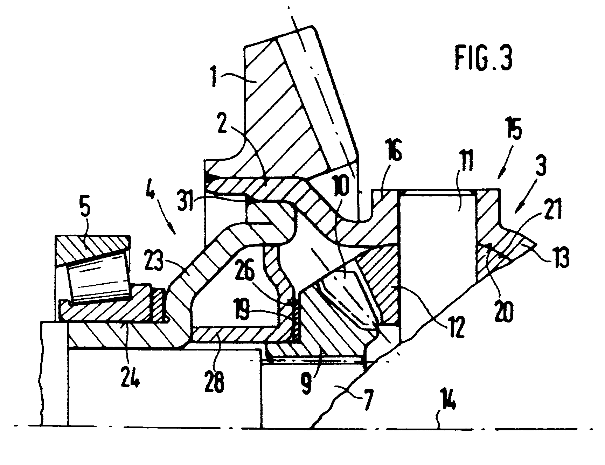

In einer Abwandlung gemäß Figur 3 weist der Deckel 6 nur eine Schräge 23 auf, die im Bereich des Flansches 2 umgebördelt und mit diesem verschweißt ist. Im Deckel 6 ist ein winkelförmiges Einlegeteil 28 eingesetzt, an welchem die weitere Stützfläche 26 ausgebildet ist.

Der zu den in den Figuren 1 und 2 rechts gezeigten Lagern 5 gehörende Lagersitz 24 kann gemäß Figur 1 direkt auf dem Tragteil 3 ausgebildet sein. In Figur 2 ist mittels Reibschweißen eine diesen Lagersitz 24 tragende Hülse 29 benachbart der Stützfläche 17 als weiteres Gehäuseteil angeordnet.

Gemäß Figur 1 sind die Differentialräder 8, 9 und die Ausgleichsräder 12 jeweils beabstandet zu den ihnen zugeordneten Stützflächen 17, 26 und Innenfläche 21 angeordnet. Der dabei entstehende Zwischenraum ist mit einem thermo- oder duroplastischen Kunststoff 30 gefüllt. Bei der Fertigung werden hierbei zunächst die miteinander kämmenden Räder 8, 9, 12 auf ein gewünschtes Maß zueinander positioniert, dann der Deckel 6 mittels einer Laserschweißung 31 eingesetzt und anschließend der Zwischenraum durch Injezieren des Kunststoffes 30 gefüllt. Zur Verringerung der notwendigen Menge an Kunststoff und zur formschlüssigen Verbindung mit den Gehäuseteilen können Rippen 32 angeordnet sein.

Bei der Montage der in den Figuren 2 und 3 gezeigten Differentialgehäuse werden zunächst die miteinander kämmenden Räder 8 und 12 auf ein gewünschtes Maß zueinander positioniert. Anschließend wird der Deckel 4 soweit in die Öffnung 22 eingeschoben, bis auch das Radpaar 9, 12 das erforderliche Spielmaß aufweist. Danach wird der Deckel 4 mittels Laserschweißung 31 am Flansch 2 befestigt und das Tellerrad 1 auf den Flansch 2 geschoben und verschweißt.

## Patentansprüche

1. Differentialgehäuse für den Achsantrieb eines Kraftfahrzeuges, mit einem Antriebsrad und mindestens zwei rotationssymmetrischen, gepreßten Gehäuseteilen und eingedrückten Vorsprüngen zur Lagerung eines Differentialbolzens, und mit quer zum Differentialbolzen verlaufend angeordneten, eine Rotationsachse aufweisenden Achsantriebswellen, wobei eines der Gehäuseteile als ein mit einem im wesentlichen kontinuierlich geneigt gegenüber der Rotationsachse (14) verlaufenden, einen die Vorsprünge (16) tragenden Abschnitt (15) aufweisenden Mantel (13) versehenes Tragteil (3) ausgebildet ist, und das Antriebsrad an einem eine Öffnung (22) des Tragteiles (3) umfassenden Flansch (2) gehalten ist, und diese Öffnung (22) von mindestens einem weiteren, als Deckel (4) ausgebildeten Gehäuseteil verschlossen ist, dadurch gekennzeichnet, daß der Deckel (14) in die vom Flansch (2) umfaßte Öffnung (22) eingesetzt ist, und das Antriebsrad (1) nur am Flansch (2) gehalten ist, und an der Außenseite des Flansches mit diesem verschweißt ist.

2. Gehäuse nach Anspruch 1, **dadurch gekennzeichnet**, daß sich die bei unterschiedlichen Drehzahlen der Achsantriebswellen (7) auf ein Differentialrad (8), welches auf einer dieser Antriebswellen (7) drehfest gelagert ist, in Richtung der Rotationsachse (14) wirkenden Kräfte an einer radial verlaufenden Stützfläche (17) des Tragteiles (3) abstützen.

3. Gehäuse nach Anspruch 1, **dadurch gekennzeichnet**, daß der Flansch (2) radial weiter beabstandet zur Rotationsachse (14) liegt als der Abschnitt (15).

4. Gehäuse nach Anspruch 2 und 3, **dadurch gekennzeichnet**, daß an dem Deckel (4) eine dem Differentialbolzen (11) zugewandte, weitere Stützfläche (26) für ein zweites Differentialrad (9) angeordnet ist.

5. Gehäuse nach Anspruch 1, **dadurch gekennzeichnet**, daß das Tragteil (3) an einem radial innen liegenden Abschnitt des Mantels (13) einen parallel zur Rotationsachse (14) verlaufenden Lagersitz (24) zur Abstützung des Differentialgehäuses aufweist.

6. Gehäuse nach Anspruch 2, **dadurch gekennzeichnet**, daß das Differentialgehäuse ein weiteres, als Hülse (29) ausgebildetes Gehäuseteil aufweist, welches benachbart der Stützfläche (17) an dem Tragteil (3) gehalten ist und einen parallel zur Rotationsachse (14) verlaufenden Lagersitz (24) zur Abstützung des Differentialgehäuses aufweist.

7. Gehäuse nach Anspruch 4, **dadurch gekennzeichnet**, daß der Deckel (4) im Querschnitt im wesentlichen dachförmig ausgebildet ist, wobei an einer Schräge (23) ein parallel zur Rotationsachse (14) verlaufender Lagersitz (24) zur Abstützung des Differentialgehäuses angeordnet ist, und eine weitere Schräge (25) die weitere Stützfläche (26) aufweist und der Verbindungsbereich (27) der beiden Schrägen (23, 25) mit einer Innenfläche (21) des Flansches (2) verbunden ist.

8. Gehäuse nach Anspruch 4, **dadurch gekennzeichnet**, daß der Deckel (4) einen parallel zur Rotationsachse (14) verlaufenden Lagersitz (24) zur Abstützung des Differentialgehäuses aufweist, an welchem eine von dem Lagersitz (24) zu einer Innenfläche (21) des Flansches (2) verlaufenden Schräge (23) ausgebildet ist.

9. Gehäuse nach Anspruch 8, **dadurch gekennzeichnet**, daß im Bereich der Schräge (23) ein winkelförmiges Einlegeteil (28) angeordnet ist, an welchem die weitere Stützfläche (26) ausgebildet ist.

10. Gehäuse nach Anspruch 2, **dadurch gekennzeichnet**, daß das Differentialrad (8) bzw. damit in Eingriff stehende Ausgleichsräder (12) beabstandet zur Stützfläche (17) bzw. einer Innenfläche (21) des Mantels (13) angeordnet sind, und der dadurch entstehende Zwischenraum mit einem zunächst flüssigen Kunststoff (30) gefüllt ist.

11. Gehäuse nach Anspruch 1, **dadurch gekennzeichnet**, daß das Antriebsrad unlösbar an dem Flansch (2) gehalten ist.

12. Gehäuse nach Anspruch 3 und/oder 6, **dadurch gekennzeichnet**, daß der Deckel (4) und/oder die Hülse (29) unlösbar an dem Tragteil (3) gehalten ist.

13. Gehäuse nach Anspruch 12, **dadurch gekennzeichnet**, daß die Verbindung zwischen Deckel (4) und Tragteil (3) sowie Antriebsrad und Tragteil (3) durch Laserschweißen hergestellt ist.

14. Gehäuse nach Anspruch 12, **dadurch gekennzeichnet**, daß die Verbindung zwischen Hülse (29) und Tragteil (3) durch Reibschweißen hergestellt ist.

## Claims

1. A differential housing for the axle drive of a motor vehicle, with a driving wheel and at least two rotationally symmetrical, pressed housing parts and crimped projections for mounting a differential pin, and with axle-drive shafts arranged extending transversely to the differential pin and having one axis of rotation, wherein one of the housing parts is constructed as a support part (3) provided with a casing (13) extending substantially continuously at an inclination with respect to the axis of rotation (14) and comprising a portion (15) provided with the projections (16), and the driving wheel is held on a flange (2) surrounding an opening (22) of the support part (3), and the said opening (22) is closed by at least one further housing part constructed as a cover (4), **characterized in that** the cover (4) is inserted into the opening (22) surrounded by the flange (2), and the drive wheel (1) is mounted only on the flange (2), and is welded to the flange on the outside thereof.

2. A housing according to Claim 1, **characterized in that** the forces acting - in the direction of the axis of rotation (14) in the case of different rotational speeds of the axle-drive shafts (7) - upon a differential gear (8) mounted rotationally fixed on one of the said axle-drive shafts (7) are absorbed on a radially extending supporting face (17) of the support part (3).

3. A housing according to Claim 1, **characterized in that** the flange (2) is situated at a greater distance radially from the axis of rotation (14) than the portion (15).

4. A housing according to Claims 2 and 3, **characterized in that** a further supporting face (26) - facing the differential pin (11) - for a second differential gear (9) is provided on the cover (4).

5. A housing according to Claim 1, **characterized in that** on a portion of the casing (13) situated radially on the inside the support part (3) has a bearing seat (24) extending parallel to the axis of rotation (14) in order to support the differential housing.

6. A housing according to Claim 2, **characterized in that** the differential housing comprises a further part which is constructed as a sleeve (29) and which is held on the support part (3) adjacent to the supporting face (17) and is provided with a bearing seat (24) extending parallel to the axis of rotation (14) in order to support the differential housing.

7. A housing according to Claim 4, **characterized in that** the cover (4) is made essentially roof-shaped in cross-section, wherein a bearing seat (24) extending parallel to the axis of rotation (14) in order to support the differential housing is provided on an inclined portion (23), and a further inclined portion (25) is provided with the further supporting face (26), and the connecting area (27) of the two inclined portions (23, 25) is joined to an inner face (21) of the flange (2).

8. A housing according to Claim 4, **characterized in that** the cover (4) comprises a bearing seat (24) extending parallel to the axis of rotation (14) in order to support the differential housing, on which an inclined portion (23) extending from the bearing seat (24) to an inner face (21) of the flange (2) is formed.

9. A housing according to Claim 8, **characterized in that** an angular insert part (28) on which the further supporting face (26) is formed is arranged in the region of the inclined portion (23).

10. A housing according to Claim 2, **characterized in that** the differential gear (8) or compensating gears (12) meshing therewith is or are arranged at a distance from the supporting face (17) or an inner face (21) of the casing (13), and the interspace formed thereby is filled with an initially liquid plastics material (30).

11. A housing according to Claim 1, **characterized in that** the driving wheel is held non-releasably on the flange (2).

12. A housing according to Claim 3 and/or 6, **characterized in that** the cover (4) and/or the sleeve (29) is held non-releasably on the support part (3).

13. A housing according to Claim 12, **characterized in that** the join between the cover (4) and the support part (3) as well as the driving wheel and the support part (3) is formed by laser welding.

14. A housing according to Claim 12, **characterized in that** the join between the sleeve (29) and the support part (3) is formed by friction welding.

## Revendications

1. Boîtier de différentiel pour l'entraînement d'essieu d'un véhicule automobile, comportant un pignon d'entraînement et au moins deux parties de boîtier moulées par pression, dans une symétrie de révolution ainsi que des saillies enfoncées pour supporter un axe de différentiel, et comportant des arbres d'entraînement d'essieu, disposés transversalement à l'axe de différentiel présentant un axe de rotation, l'une des parties de boîtier étant configurée en élément porteur (3) pourvu d'une enveloppe (13) s'étendant sensiblement en continu, de manière inclinée par rapport à l'axe de rotation (14), présentant une portion (15), portant les saillies (16), et le pignon d'entraînement est maintenu contre une bride (2) entourant une ouverture (22) de l'élément porteur (3), et cette ouverture (22) est fermée par au moins une autre partie de boîtier, configurée en couvercle (4), caractérisé en ce que le couvercle (4) est placé dans l'ouverture (22) entourée par la bride (2), et le pignon d'entraînement (1) n'est maintenu que contre la bride (2) et soudée sur le côté extérieur de la bride, avec celle-ci.

2. Boîtier selon la revendication 1, caractérisé en ce que les forces agissant, en cas de vitesses de rotation différentes des arbres d'entraînement d'essieu (7), sur un pignon différentiel (8), qui est monté solidaire en rotation sur l'un de ces arbres d'entraînement (7), en direction de l'axe de rotation (14), prennent appui contre une surface d'appui (17) radiale de l'élément porteur (3).

3. Boîtier selon la revendication 1, caractérisé en ce que la bride (2) est plus éloignée radialement de l'axe de rotation (14) que la portion (15).

4. Boîtier selon les revendications 2 et 3, caractérisé en ce que sur le couvercle (4) est prévue une autre surface d'appui (26), tournée vers l'axe différentiel (11), pour un deuxième pignon de différentiel (9).

5. Boîtier selon la revendication 1, caractérisé en ce que l'élément porteur (3) présente, sur une portion radialement intérieure de l'enveloppe (13), un siège de palier (24), parallèle à l'axe de rotation (14) pour l'appui du boîtier de différentiel.

6. Boîtier selon la revendication 2, caractérisé en ce que le boîtier de différentiel comporte une autre partie de boîtier configurée en douille (29), qui est maintenue au voisinage de la surface d'appui (17), sur l'élément porteur (3), et qui présente un siège de palier (24), parallèle à l'axe de rotation (14) pour l'appui du boîtier de différentiel.

7. Boîtier selon la revendication 4, caractérisé en ce que le couvercle (4) est sensiblement en forme de toit dans sa section transversale, sur une surface oblique (23), un siège de palier (24), parallèle à l'axe de rotation (14), étant prévu pour soutenir le boîtier de différentiel, et une autre surface oblique (25) présentant l'autre surface d'appui (26) et la zone de liaison (27) des deux surfaces obliques (23, 25) étant reliée à une surface intérieure (21) de la bride (2).

8. Boîtier selon la revendication 4, caractérisé en ce que le couvercle (4) présente un siège de palier (24), parallèle à l'axe de rotation (14), pour l'appui du boîtier de différentiel, sur lequel est formée une surface oblique (23) s'étendant du siège de palier (24) vers une surface intérieure (21) de la bride (2).

9. Boîtier selon la revendication 8, caractérisé en ce que dans la zone de la surface oblique (23) est prévu une garniture (28) angulaire, sur laquelle est formée l'autre surface d'appui (26).

10. Boîtier selon la revendication 2, caractérisé en ce que le pignon de différentiel (8) ou des pignons de compensation (12), en prise avec celui-ci, sont espacés de la surface d'appui (17) d'une surface intérieure (21) de l'angle (13) et l'espace intermédiaire ainsi formé est rempli avec une matière plastique (30) d'abord liquide.

11. Boîtier selon la revendication 1, caractérisé en ce que le pignon d'entraînement est maintenu de manière inamovible sur la bride (2).

12. Boîtier selon la revendication 3 et/ou 6, caractérisé en ce que le couvercle (4) et/ou la douille (29) sont maintenus inamovibles sur l'élément porteur (3).

13. Boîtier selon la revendication 12, caractérisé en ce que la liaison entre le couvercle (4) et l'élément porteur (3) ainsi que le pignon d'entraînement et l'élément porteur (3) sont réalisés par soudage à laser.

14. Boîtier selon la revendication 14, caractérisé en ce que la liaison entre la douille (29) et l'élément porteur (3) est réalisée par soudage par friction.
